# EUROPEAN PATENT APPLICATION

(11) **EP 4 241 633 A1**
(43) Date of publication of application: **13.09.2023**
(21) Application number: 21889258.6
(22) Date of filing: 05.11.2021
(51) Int. Cl.: A47J 43/00, A61L 2/08, A23P 30/00

(54) **OPERATION METHOD FOR FOOD PROCESSING DEVICE, AND FOOD PROCESSING DEVICE**

(30) Priority: 06.11.2020 JP 2020186067
(71) Applicant: Panasonic Intellectual Property Management Co., Ltd., Osaka-shi, Osaka 540-6207 (JP)
(72) Inventor: UKAI, Kunihiro, Osaka-shi, Osaka 540-6207 (JP); INO, Daisuke, Osaka-shi, Osaka 540-6207 (JP); HASHIMOTO, Yasuhiro, Osaka-shi, Osaka 540-6207 (JP); WAKITA, Hidenobu, Osaka-shi, Osaka 540-6207 (JP)
(74) Representative: Eisenführ Speiser
(86) International application number: PCT/JP2021/040700
(87) International publication number: WO 2022/097706

(57) **Abstract**

A method for operating a food processing device (100) includes an irradiation step (S17). The food processing device (100) includes a reaction vessel (1) and a catalyst reactor (6). The reaction vessel (1) receives a mixture in a liquid form including a raw material for a food product and water. The catalyst reactor (6) is disposed in the reaction vessel (1). The catalyst reactor (6) includes a reaction tube (7) and a light source (8) disposed in the reaction tube (7). The reaction tube (7) has an outer surface on which a photocatalyst is provided, and transmits light emitted from the light source (8). The method for operating the food processing device (100) includes the irradiation step (S17) of performing irradiation with light from the light source (8) while water is in contact with the outer surface of the reaction tube (7) in a period after a reaction product is removed from the reaction vessel (1) and before a raw material is subsequently introduced into the reaction vessel (1).

## Description

### Technical Field

The present disclosure relates to a method for operating a food processing device and a food processing device.

### Background Art

PTL 1 describes a manufacturing method in which a photocatalyst is used in a process of manufacturing a food product to kill microorganisms in a brewed product at room temperature in an unheated condition.

### Citation List

### Patent Literature

PTL 1: Japanese Unexamined Patent Application Publication No. 2003-250514

### Summary of Invention

The device and the manufacturing method according to PTL 1 have room for improvement. For example, it is difficult to effectively reform a reaction product for a food product.

In light of the above-described circumstances, an aspect of the present disclosure provides, for example, a food processing device capable of effectively reforming a reaction product for a food product.

According to an aspect of the present disclosure, a method for operating a food processing device includes an irradiation step. The food processing device includes a reaction vessel and a catalyst reactor. The reaction vessel receives a mixture in a liquid form including a raw material for a food product and water. The catalyst reactor is disposed in the reaction vessel. The catalyst reactor includes a reaction tube and a light source disposed in the reaction tube. The reaction tube has an outer surface on which a photocatalyst is provided, and transmits light emitted from the light source. The method for operating the food processing device includes the irradiation step of performing irradiation with light from the light source while water is in contact with the outer surface of the reaction tube in a period after a reaction product is removed from the reaction vessel and before a raw material is subsequently introduced into the reaction vessel.

According to another aspect of the present disclosure, a food processing device includes a reaction vessel, a catalyst reactor, and a controller. The reaction vessel receives a mixture in a liquid form including a raw material for a food product and water. The catalyst reactor is disposed in the reaction vessel and includes a reaction tube and a light source. The reaction tube has an outer surface on which a photocatalyst is provided, and transmits light. The light source emits light from an inside of the reaction tube to irradiate the photocatalyst. The controller performs irradiation with light from the light source while water is in contact with the outer surface of the reaction tube in a period after a reaction product including the mixture is removed from the reaction vessel and before a raw material is subsequently introduced into the reaction vessel.

It should be noted that these general or specific aspects may be implemented as a system, an integrated circuit, a computer program, a computer-readable recording medium, or any combination of a device, a system, a method, an integrated circuit, a computer program, and a computer-readable recording medium. The computer-readable recording medium includes, for example, a non-transitory recording medium, such as a compact disc read-only memory (CD-ROM).

The method for operating the food processing device according to the aspect of the present disclosure enables stable operation of the food processing device and effective reforming of the reaction product for the food product.

### Brief Description of Drawings

[Fig. 1] Fig. 1 illustrates an example of a food processing device according to a first embodiment.
[Fig. 2] Fig. 2 illustrates an example of the structure of a catalyst reactor according to the first embodiment.
[Fig. 3] Fig. 3 is a block diagram of the food processing device according to the first embodiment.
[Fig. 4] Fig. 4 is a flowchart of an example of a method for operating the food processing device according to the first embodiment.
[Fig. 5] Fig. 5 is a flowchart of an example of a determination process for the food processing device according to a first modification.
[Fig. 6] Fig. 6 is a flowchart of another example of a determination process for the food processing device according to a second modification.
[Fig. 7] Fig. 7 is a flowchart of another example of a determination process for the food processing device according to a third modification.
[Fig. 8] Fig. 8 is a flowchart of an example of a method for operating the food processing device according to a fourth modification.
[Fig. 9] Fig. 9 illustrates an example of a food processing device according to a second embodiment.
[Fig. 10] Fig. 10 is a block diagram of the food processing device 200 according to the second embodiment.

### Description of Embodiments

### (Underlying Knowledge Forming Basis of the Present Disclosure)

The inventors of the present disclosure have found that the device or method for manufacturing a food product described above in the "Background Art" section have the following problems.

In the manufacture of a food product, reforming of a raw material for the food product is often performed for the purpose of, for example, increasing the manufacturing efficiency and contents of nutritional components.

The raw material for the food product may be reformed by, for example, using a catalyst. In the manufacture of margarine, for example, a nickel catalyst may be used to hydrogenate oil and fat components, which are raw materials. Another example of a catalyst used in the manufacture of a food product is an immobilized enzyme.

The catalyst may also be used for the purpose of sterilization in the manufacturing process instead of reforming of the raw material for the food product. For example, PTL 1 describes a manufacturing method in which a photocatalyst is used in a process of manufacturing a food product to kill microorganisms in a brewed product at room temperature in an unheated condition.

In the known method using the catalyst, the catalytic activity may be reduced (catalyst may be degraded) as the raw material for the food product is reformed, and there is a possibility that the expected reactivity cannot be obtained. For example, also in a device for use in the manufacturing method in which the photocatalyst is used for the purpose of sterilization, appropriate sterilization characteristics cannot be obtained when the catalytic activity is reduced. Thus, the method in which the catalyst is used to reform the raw material for the food product has room for improvement in terms of maintenance of the catalytic activity.

In light of the above-described circumstances, an aspect of the present disclosure newly provides a method for operating a food processing device and a food processing device in which a photocatalyst is used to reform a raw material for a food product.

According to an aspect of the present disclosure, a method for operating a food processing device includes an irradiation step. The food processing device includes a reaction vessel and a catalyst reactor. The reaction vessel receives a mixture in a liquid form including a raw material for a food product and water. The catalyst reactor is disposed in the reaction vessel. The catalyst reactor includes a reaction tube and a light source disposed in the reaction tube. The reaction tube has an outer surface on which a photocatalyst is provided, and transmits light emitted from the light source. The method for operating the food processing device includes the irradiation step of performing irradiation with light from the light source while water is in contact with the outer surface of the reaction tube in a period after a reaction product is removed from the reaction vessel and before a raw material is subsequently introduced into the reaction vessel.

Accordingly, in a period after the reaction product is removed from the reaction vessel and before the raw material is subsequently introduced into the reaction vessel, water is brought into contact with the outer surface of the reaction tube. In other words, the outer surface of the reaction tube is wetted. Therefore, the possibility that the reaction product will remain on the outer surface can be reduced. In addition, the irradiation with light from the light source is performed while the outer surface of the reaction tube is wet so that excitons can be generated in the photocatalyst on the outer surface from water. The excitons can be used to dissolve organic components adhering to the photocatalyst on the outer surface, thereby restoring the catalytic activity of the photocatalyst. In other words, the food reaction device can be stably operated, and the reaction product used for the food product can be effectively reformed.

The method may further include: a first introduction step of introducing the water into the reaction vessel; a second introduction step of introducing the raw material into the reaction vessel; a reaction step of promoting reaction of the mixture by irradiation with light from the light source while the mixture is in contact with the outer surface of the reaction tube, the mixture including the water and the raw material that have been introduced; a removing step of removing the reaction product from the reaction vessel; and a cleaning step of cleaning an inside of the reaction vessel with water. A group of steps may be repeatedly performed, the group of steps including an introduction step including the first introduction step and the second introduction step, the reaction step, the removing step, and the cleaning step that are performed in that order in one cycle. When the group of steps is repeatedly performed, the irradiation step is performed in a period after the removing step and before the second introduction step in the subsequent group of steps.

Accordingly, in the period after the removing step and before the second introduction step in the subsequent group of steps, water is brought into contact with the outer surface of the reaction tube. In other words, the outer surface of the reaction tube is wetted. Therefore, the possibility that the reaction product will remain on the outer surface can be reduced. In addition, since the irradiation with light from the light source is performed while the outer surface of the reaction tube is wet, excitons generated in the photocatalyst layer on the outer surface from water can be used to dissolve the organic components on the surface of the photocatalyst, thereby restoring the catalytic activity. In other words, the food reaction device can be stably operated, and the reaction product used for the food product can be effectively reformed.

In the reaction step, an accumulated time for which the reaction step has been performed may be measured. When the accumulated time has exceeded a predetermined accumulated time, an irradiation time for which the irradiation with light from the light source is performed in the irradiation step may be set to a longer time than when the accumulated time has not exceeded the predetermined accumulated time.

As the accumulated time for which the reaction step has been performed increases, a greater amount of organic components adhere to the outer surface of the reaction tube. Accordingly, when the predetermined accumulated time is not exceeded, the amount of organic components adhering to the outer surface of the reaction tube is not so large that sufficient catalytic activity cannot be obtained. Therefore, the irradiation with light is performed for a normal irradiation time until the predetermined accumulated time is exceeded, and the irradiation with light is performed for an irradiation time longer than the normal irradiation time when the predetermined accumulated time is exceeded. Thus, the organic components can be effectively dissolved.

In the reaction step, an accumulated time for which the reaction step has been performed may be measured. When the accumulated time has exceeded a predetermined accumulated time, an intensity of light emitted by the light source in the irradiation step may be set to a greater intensity than when the accumulated time has not exceeded the predetermined accumulated time.

As the accumulated time for which the reaction step has been performed increases, a greater amount of organic components adhere to the outer surface of the reaction tube. Accordingly, when the predetermined accumulated time is not exceeded, the amount of organic components adhering to the outer surface of the reaction tube is not so large that sufficient catalytic activity cannot be obtained. Therefore, the irradiation with light is performed at a normal intensity until the predetermined accumulated time is exceeded, and the irradiation with light is performed at an intensity greater than the normal intensity when the predetermined accumulated time is exceeded. Thus, the organic components can be effectively dissolved.

The first introduction step may be performed prior to the second introduction step. The irradiation step may be performed in a period after the first introduction step and before the second introduction step. In the irradiation step, the irradiation with light from the light source may be performed while the water introduced into the reaction vessel in the first introduction step is in contact with the outer surface of the reaction tube.

Accordingly, the organic components adhering to the outer surface of the reaction tube can be dissolved by using the water used as the material of the mixture. Thus, the water used in the irradiation step can be saved.

The food processing device may further include a stirrer that stirs the mixture in the reaction vessel. In the irradiation step, stirring of the water introduced into the reaction vessel in the first introduction step may be performed by using the stirrer. In the irradiation step, the stirring and the irradiation are performed in a same period.

Accordingly, the outer surface of the reaction tube can be irradiated with light while water is stirred and brought into contact with the outer surface of the reaction tube. Thus, the organic components adhering to the outer surface can be effectively dissolved.

The food processing device may further include a cleaner that cleans the outer surface of the reaction tube with water. In the cleaning step, the outer surface of the reaction tube may be cleaned by using the cleaner. The irradiation step may be performed subsequent to the cleaning step. In the irradiation step, the irradiation with light from the light source may be performed while water from the cleaner is in contact with the outer surface.

Accordingly, the organic components adhering to the outer surface of the reaction tube can be dissolved by using the water used to clean the outer surface of the reaction tube. Thus, the water used in the irradiation step can be saved.

The cleaner may be capable of supplying water used for cleaning to the outer surface of the reaction tube. In the irradiation step, the irradiation with light from the light source may be performed while water is being supplied to the outer surface by the cleaner.

Accordingly, the outer surface of the reaction tube can be irradiated with light from the light source while a film of water is formed on the outer surface. Thus, the organic components adhering to the outer surface can be effectively dissolved.

The food processing device may further include a light quantity detector that detects a quantity of light emitted from the light source and transmitted through the reaction tube. The irradiation step may be skipped when the quantity of light detected by the light quantity detector upon irradiation with light from the light source is greater than or equal to a predetermined light quantity in a period after the removing step and before the introduction step in the subsequent group of steps.

Accordingly, when the quantity of light detected by the light quantity detector is greater than or equal to the predetermined light quantity, it can be determined that the amount of organic components adhering to the outer surface of the reaction tube is not so large that sufficient catalytic activity cannot be obtained. Therefore, when the quantity of light detected by the light quantity detector is greater than or equal to the predetermined light quantity, the irradiation step can be skipped to reduce the time required for the irradiation step and the electric power consumed in the irradiation step.

The irradiation step may be performed when the quantity of light detected by the light quantity detector upon the irradiation with light from the light source is less than the predetermined light quantity in the period after the removing step and before the introduction step in the subsequent group of steps.

Accordingly, when the quantity of light detected by the light quantity detector is less than the predetermined light quantity, it can be determined that the amount of organic components adhering to the outer surface of the reaction tube is so large that sufficient catalytic activity cannot be obtained. Therefore, when the quantity of light detected by the light quantity detector is less than the predetermined light quantity, the irradiation step is performed. Thus, the organic components adhering to the outer surface of the reaction tube can be efficiently dissolved.

According to another aspect of the present disclosure, a food processing device includes a reaction vessel, a catalyst reactor, and a controller. The reaction vessel receives a mixture in a liquid form including a raw material for a food product and water. The catalyst reactor is disposed in the reaction vessel and includes a reaction tube and a light source. The reaction tube has an outer surface on which a photocatalyst is provided, and transmits light. The light source emits light from an inside of the reaction tube to irradiate the photocatalyst. The controller performs irradiation with light from the light source while water is in contact with the outer surface of the reaction tube in a period after a reaction product including the mixture is removed from the reaction vessel and before a raw material is subsequently introduced into the reaction vessel.

### (First Embodiment)

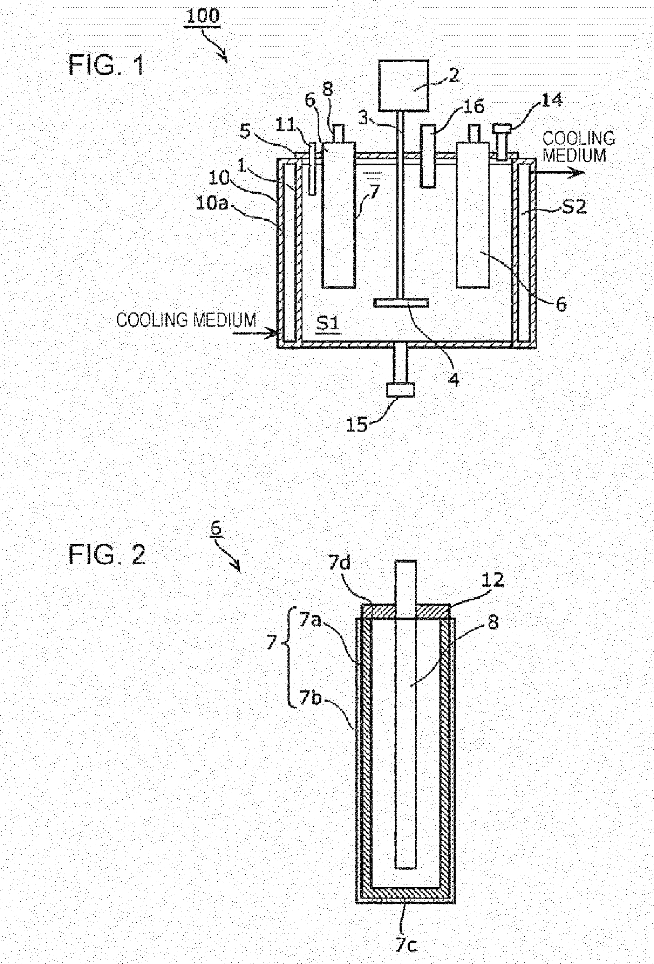

The structure of a food processing device 100 will be described with respect to Fig. 1. Fig. 1 illustrates an example of the food processing device 100 according to the embodiment.

As illustrated in Fig. 1, the food processing device 100 includes a reaction vessel 1, a stirrer 2, catalyst reactors 6, a cooler 10, a temperature detector 11, a controller 13, a water supplier 14, a discharger 15, and a light quantity detector 16.

The reaction vessel 1 has a first space S1 for receiving a reaction product for a food product, the reaction product being in a liquid form. The reaction vessel 1 is, for example, a container having a cylindrical shape with a bottom. The reaction vessel 1 may be any container having a tubular shape with a bottom and having the first space S1 for receiving the reaction product in a liquid form, and the shape thereof is not limited to a cylindrical shape. The reaction vessel 1 has a lid 5 that blocks an opening at the top of the reaction vessel 1. The lid 5 is a disc-shaped member, and has through holes through which a rotating shaft 3 of a stirring body 4, the catalyst reactors 6, and the temperature detector 11 extend.

The stirrer 2 includes the stirring body 4 that rotates to stir the reaction product in the reaction vessel 1. The stirrer 2 is positioned such that the rotating shaft 3 thereof extends along a central axis of the reaction vessel 1 having the cylindrical shape. The stirrer 2 includes a motor (not illustrated) that rotates the rotating shaft 3.

The stirring body 4 will be further described.

The stirring body 4 may include, for example, inclined paddle blades. The stirring body 4 may include propeller blades, disc turbine blades, or a centrifugal stirring body in accordance with the operation processing conditions, such as the viscosity of the reaction product and the electric power consumption of the stirrer 2, to optimize the processing conditions. When the food processing device 100 includes more than one stirring bodies 4, each stirring body 4 at least includes inclined paddle blades, propeller blades, disc turbine blades, or a centrifugal stirring body.

The food processing device 100 includes more than one catalyst reactors 6. The catalyst reactors 6 (six catalyst reactors 6 in the present embodiment) are arranged around the rotating shaft 3 of the stirring body 4 with intervals therebetween when viewed in an axial direction of the rotating shaft 3 of the stirring body 4. The six catalyst reactors 6 are surrounded by an inner wall surface of the reaction vessel 1. In other words, the catalyst reactors 6 are disposed in the first space S1 in the reaction vessel 1. Accordingly, when the stirrer 2 stirs the reaction product in the reaction vessel 1, the stirred reaction product can move between the catalyst reactors 6.

The structure of each catalyst reactor 6 will be described in detail with reference to Fig. 2. Fig. 2 illustrates an example of the structure of each catalyst reactor 6 according to the first embodiment.

As illustrated in Fig. 2, each catalyst reactor 6 includes a reaction tube 7 and a light source 8. The catalyst reactor 6 may also include a sealing portion 12 that seals the gap between the light source 8 and an opening portion 7d of the reaction tube 7. The reaction tube 7 has a bottom surface 7c at one end and the opening portion 7d at the opposite end (other end). The reaction tube 7 may be filled with dry gas.

The reaction tube 7 includes an outer surface on which a photocatalyst is provided and the bottom surface 7c sealed at one end thereof. The reaction tube 7 transmits light. More specifically, the reaction tube 7 includes a glass base 7a having a cylindrical shape with a bottom and a photocatalyst thin film 7b provided on an outer surface of the glass base 7a. The glass base 7a is oriented such that an axial direction of the glass base 7a having the cylindrical shape extends along the rotating shaft 3 of the stirring body 4.

The photocatalyst thin film 7b is formed on the outer surface of the glass base 7a by, for example, a general sol-gel process. More specifically, the photocatalyst thin film 7b is made of TiO2. Sol-gel liquid used in the method of forming the photocatalyst thin film 7b is applied to the outer surface of the glass base 7a, and the glass base 7a having the sol-gel liquid applied thereto is rotated by using a rotator. Thus, the sol-gel liquid is uniformly applied over the entire outer surface of the glass base 7a. After the sol-gel liquid applied to the glass base 7a is dry, the glass base 7a is dried in an electric furnace, and then heated at a high temperature of greater than or equal to 500°C. Thus, the photocatalyst thin film 7b is formed on the outer surface of the glass base 7a.

The light source 8 emits light from the inside of the reaction tube 7 to irradiate the photocatalyst. The light source 8 is inserted into the glass base 7a through an open portion of the glass base 7a at an end opposite to the end at which the bottom surface 7c is provided. More specifically, the light source 8 includes a light source that emits light having a central wavelength of about 260 nm to about 400 nm so that excitons can be effectively generated in the photocatalyst. The light source 8 includes, for example, a fluorescent lamp that emits light having a center wavelength in an ultraviolet wavelength range of 315 nm to 400 nm (UV-A). Accordingly, the reaction of the reaction product can be effectively promoted by the photocatalyst.

The light source 8 may be disposed to face the thin film 7b on the outer surface of the reaction tube 7 to effectively irradiate the thin film 7b on the outer surface of the glass base 7a with light. The light source 8 may include, for example, a high-pressure mercury lamp or a light emitting diode (LED) that emits ultraviolet rays. The LED has a high luminous efficiency and generate a relatively small amount of heat. Therefore, the amount of convection generated in the reaction tube 7 can be reduced compared to when a light source that generates a large amount of heat is used. Accordingly, introduction of outside air into the reaction tube 7 can be reduced. A fluorescent lamp, which also generates a relatively small amount of heat, may also be used.

The cooler 10 cools the reaction product in the reaction vessel 1. The cooler 10 is disposed to surround the catalyst reactors 6. More specifically, the cooler 10 includes an outer wall 10a that surrounds the reaction vessel 1 and a cooling medium (refrigerant) that flows through a second space S2 between the reaction vessel 1 and the outer wall 10a.

The cooler 10 operates based on the temperature detected by the temperature detector 11 to adjust the temperature of the reaction product. More specifically, when the reaction product is to be cooled from a temperature higher than a first temperature to the first temperature, the cooler 10 causes refrigerant at a temperature of less than or equal to the first temperature to flow through the second space S2. Thus, the cooler 10 cools the reaction product by causing the refrigerant and the reaction product to exchange heat through the reaction vessel 1. After the temperature of the refrigerant is increased as a result of heat exchange between the refrigerant and the reaction product, the refrigerant may, for example, be cooled to a temperature less than or equal to the first temperature by a heat exchanger (not illustrated) disposed outside the second space S2, and then returned to the second space S2 through a pipe (not illustrated). A circulation pump (not illustrated), for example, may be provided to circulate the refrigerant between the second space S2 and the above-described heat exchanger. In this case, the cooler 10 may start cooling the reaction product by starting the operation of the circulation pump.

The temperature detector 11 is disposed in the reaction vessel 1 and detects the temperature of the reaction product. The temperature detector 11 may include, for example, a thermistor or a thermocouple. The temperature detector 11 extends through the lid 5, and, for example, is fixed to the lid 5.

The water supplier 14 is disposed on the lid 5 and supplies water into the first space S1 of the reaction vessel 1. The water supplier 14 may include a water supply pipe through which water is supplied and a valve connected to the water supply pipe. The valve may be, for example, a solenoid valve or an electric valve that switches between a state (open state) in which water is supplied to the reaction vessel 1 through the pipe and a state (closed state) in which water is not supplied.

The discharger 15 is disposed on a bottom portion of the reaction vessel 1 and discharges the reaction product or water accumulated in the reaction vessel 1. The discharger 15 may include a valve, such as a solenoid valve or an electric valve, that is connected to an outlet (not illustrated) extending through the bottom portion of the reaction vessel 1 and that switches between a state (open state) in which the reaction product or water accumulated in the reaction vessel 1 is discharged through the outlet and a state (closed state) in which the reaction product or water is not discharged.

The light quantity detector 16 is disposed on a side of one of the catalyst reactors 6 in the internal space S 1 of the reaction vessel 1 and detects a quantity of light transmitted through the catalyst reactor 6. More specifically, the light quantity detector 16 detects a quantity of light emitted from the light source 8 of the catalyst reactor 6 and transmitted through the reaction tube 7. The light quantity detector 16 may include, for example, a light quantity sensor.

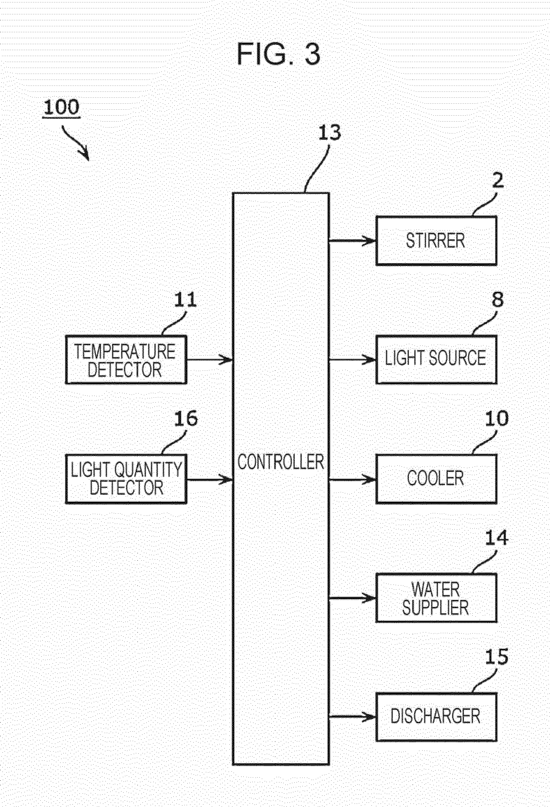

The controller 13 included in the food processing device 100 will now be described with reference to Fig. 3. Fig. 3 is a block diagram of the food processing device 100 according to the first embodiment.

The controller 13 controls the operation of the food processing device 100. The controller 13 receives detection results obtained by the temperature detector 11 and the light quantity detector 16, and controls at least one of the stirrer 2, the light source 8, the cooler 10, the water supplier 14, or the discharger 15 based on the received detection results. The controller 13 may be realized as, for example, a processor and a memory storing a program executed by the processor. The controller 13 may be realized as, for example, a dedicated circuit.

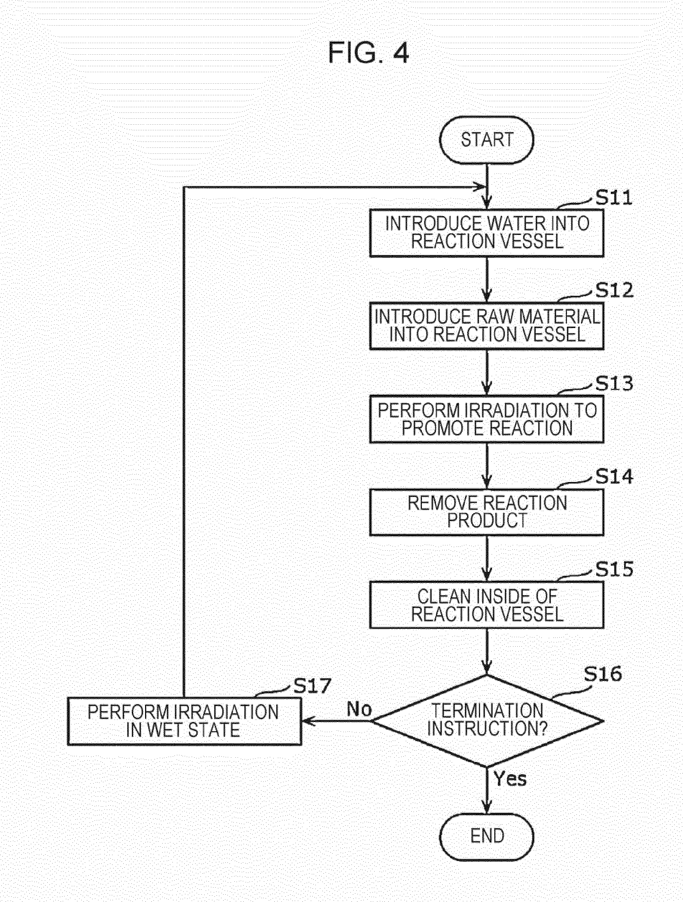

The operation of the food processing device 100 will now be described with reference to Fig. 4. Fig. 4 is a flowchart of an example of a method for operating the food processing device 100 according to the first embodiment.

First, the controller 13 switches the water supplier 14 from a state in which the water supplier 14 does not supply water to a state in which the water supplier 14 supplies water, so that water is introduced into the reaction vessel 1 from the water supplier 14 (S11: first introduction step). In the first introduction step, water may be manually introduced into the reaction vessel 1. When a predetermined amount of water is accumulated in the reaction vessel 1 in the first introduction step, the controller 13 switches the water supplier 14 to the state in which the water supplier 14 does not supply water.

Next, a raw material for the food product (hereinafter referred to as a raw material) is introduced into the reaction vessel 1 (S12: second introduction step). In the second introduction step, a predetermined amount of raw material may be automatically measured and introduced into the reaction vessel 1 by an introduction device, or be manually measured and introduced into the reaction vessel 1. The raw material is in a solid form, for example, a powder form.

In an introduction step including step S11 and step S12, step S12 may be performed prior to or at the same time as step S11. In the introduction step, a mixture of water and the raw material may be introduced into the reaction vessel 1.

When water and the raw material are introduced into the reaction vessel 1, the controller 13 may drive the stirrer 2 to stir the water and the raw material and form a mixture in a liquid form.

Next, the controller 13 turns on the light source 8 to start irradiation of the photocatalyst thin film 7b of the corresponding reaction tube 7 with light from the inside of the reaction tube 7 (S13: reaction step). In the reaction step, the thin film 7b on the outer surface of the reaction tube 7 is irradiated with light from the light source 8 while the introduced mixture is in contact therewith. Accordingly, reaction of the mixture is promoted. In the reaction step, the controller 13 drives the motor of the stirrer 2 to rotate the rotating shaft 3 of the stirring body 4, so that the reaction product in the reaction vessel 1 is stirred. In addition, in the reaction step, the controller 13 drives the circulation pump of the cooler 10 to supply the cooling medium to the second space S2 of the cooler 10.

At this time, the controller 13 causes the temperature detector 11 to detect the temperature of the reaction product, and adjusts the temperature of the cooling medium supplied to the second space S2 and/or the amount of the cooling medium supplied to the second space S2 so that the temperature of the reaction product approaches a preset temperature. For example, the controller 13 adjusts the temperature of the cooling medium by adjusting the amount of heat exchanged by the heat exchanger installed outside the second space S2. More specifically, when the heat exchanger is an air-cooling heat exchanger, the controller 13 may adjust the temperature of the cooling medium by adjusting the flow rate of a fan that promotes air-cooling by the heat exchanger. When the heat exchanger is a water-cooling heat exchanger, the controller 13 may adjust the temperature of the cooling medium by adjusting the amount of water flowing from a pump that promotes water-cooling by the heat exchanger. The controller 13 may adjust the amount of cooling medium supplied to the second space by adjusting the amount of circulation by a circulation pump for circulating the cooling medium between the second space S2 outside the reaction vessel 1 and the heat exchanger. Thus, the temperature of the cooling medium and/or the amount of the cooling medium that is supplied can be adjusted by using, for example, a circulation device (not illustrated) including the heat exchanger, the circulation pump, and the pipe.

When, for example, the reaction of the reaction product in the food processing device 100 is fermentation by brewer's yeast, the temperature may be set to a low temperature (for example, about 5°C) for maturation. In this case, the preset target temperature for the cooler 10 is 5°C.

In the food processing device 100, the photocatalyst irradiated with light and the reaction product, which is the raw material for the food product, are brought into contact with each other so that the reaction product is reformed by the photocatalyst. For example, when a raw material for beer is reformed, the period of fermentation can be reduced by dissolving sugar in the wort in advance.

The controller 13 performs the reaction step for a preset reaction time to reform the mixture, and stops the operation of the reaction step when the reaction time is over. More specifically, the controller 13 turns off the light source 8, stops the motor of the stirrer 2, and stops the operation of the cooler 10.

Next, the controller 13 switches the discharger 15 from a state in which the discharger 15 does not discharge the reaction product to a state in which the discharger 15 discharges the reaction product, so that the reaction product including the mixture is removed from the reaction vessel 1 (S14: removing step).

Next, the controller 13 cleans the inside of the reaction vessel 1 with water (S15: cleaning step). In the present embodiment, the controller 13 switches the water supplier 14 from the state in which the water supplier 14 does not supply water to the state in which the water supplier 14 supplies water, so that water is introduced into the reaction vessel 1 from the water supplier 14. Then, the controller 13 operates the stirrer 2 while the reaction vessel 1 is filled with water, and thereby cleans the inside of the reaction vessel 1 with water. Thus, the reaction product adhering to the outer surface of the reaction tube 7 can be removed. Then, the controller 13 switches the discharger 15 from the state in which the discharger 15 does not discharge water to the state in which the discharger 15 discharges water, so that the water used in the cleaning process is removed from the reaction vessel 1.

When step S15 is finished, the controller 13 may determine whether a terminating instruction is issued (S16).

When it is determined that the terminating instruction is issued (Yes in S16), the controller 13 terminates the operation method. When it is determined that the terminating instruction is not issued (No in S16), the controller 13 performs an irradiation step (step S17) and repeats a group of steps including steps S11 to S15 as one cycle to proceed with the process of reforming the raw material for the food product. In other words, the controller 13 repeats the introduction step, the reaction step, the removing step, and the cleaning step until the terminating instruction is issued.

In step S17, the controller 13 performs irradiation with light from the light source 8 while water is in contact with the outer surface of the reaction tube 7 (S17: irradiation step). The controller 13 may perform the irradiation with light from the light source 8 while the water used in the cleaning step is in contact with the outer surface of the reaction tube 7. The controller 13 may perform the irradiation step without removing the water used for cleaning in the cleaning step from the reaction vessel 1. Thus, the irradiation with light from the light source 8 can be performed while the water accumulated in the reaction vessel 1 for the cleaning process is in contact with the outer surface of the reaction tube 7.

In the reforming process, organic components of the raw material come into contact with the photocatalyst thin film 7b of the catalyst reactor 6 and react with excitons generated in the thin film 7b as a result of the irradiation with light from the light source 8, thereby promoting the reaction for reforming the raw material. The organic components that have not come into contact with the excitons may adhere to the surface of the thin film 7b. For example, fatty acid, which is an organic component, adheres to the photocatalyst thin film 7b and forms a thin film of fatty acid. In areas in which the thin film of fatty acid is formed, supply of water molecules and oxygen dissolved in water, which are necessary for the generation of excitons, to the photocatalyst is reduced, and the reaction for reforming the raw material is impeded as a result.

Accordingly, in the food processing device 100 of the present embodiment, the irradiation step is performed in a period after the removal of the reaction product from the reaction vessel 1 (that is, after the removing step) and before the raw material is subsequently introduced into the reaction vessel 1 (that is, before the subsequent second introduction step). When the irradiation with light from the light source 8 is performed while the reaction tube 7 is wet with water as described above, excitons can be effectively generated by promoting decomposition of water. In addition, the irradiation is performed after the cleaning step, in which the amount of raw material adhering to the reaction tube 7 is reduced, and before the second introduction step, in which the raw material is introduced. Therefore, the generated excitons may be used not for the reaction with the raw material but for dissolving the thin film of fatty acid formed on the photocatalyst thin film 7b. Thus, the catalytic activity of the photocatalyst thin film 7b can be effectively restored after the reaction for reforming the raw material and before the introduction of the raw material.

### (First Modification)

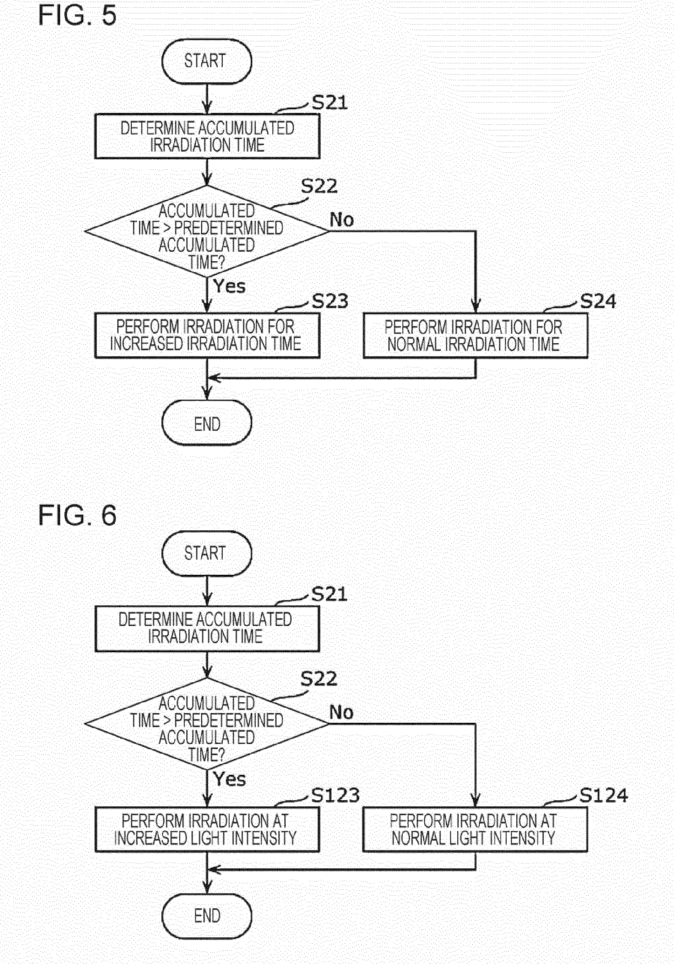

Fig. 5 is a flowchart of an example of a determination process for the food processing device 100 according to a first modification. The operation in the irradiation step of the method for operating the food processing device 100 is changed depending on the result of the determination process.

The amount of organic components that adhere to the thin film 7b without coming into contact with the excitons increases while the raw material is near the thin film 7b, and is therefore proportional to the time for which the reaction for reforming the raw material is performed. In other words, the amount of organic components adhering to the outer surface of the reaction tube increases as the accumulated time for which the reaction step has been performed increases. The time for which the reaction for reforming the raw material has been performed is proportional to the time for which the irradiation with light from the light source 8 has been performed.

Accordingly, as illustrated in Fig. 5, the controller 13 determines the accumulated time for which the reaction product introduced into the reaction vessel 1 has been irradiated with light in the reaction step (S21). More specifically, the controller 13 measures the accumulated time for which the reaction step has been performed.

Next, the controller 13 determines whether the measured accumulated time has exceeded a predetermined accumulated time (S22). The predetermined accumulated time is a period determined in advance. The predetermined accumulated time may be set based on the time at which the catalytic activity is reduced to less than a predetermined threshold by measuring the relationship between the time for which the reaction for reforming the raw material is performed and the catalytic activity in advance.

When it is determined that the measured accumulated time has exceeded the predetermined accumulated time (Yes in S22), the controller 13 performs the irradiation for a longer (increased) irradiation time than a normal irradiation time in the subsequent irradiation step (S23). Accordingly, in the subsequent irradiation step performed after the predetermined accumulated time has been exceeded, a greater amount of organic components adhering to the thin film 7b of the reaction tube 7 can be dissolved. Thus, the operation of restoring the catalytic activity can be effectively performed.

When it is determined that the measured accumulated time has not exceeded the predetermined accumulated time (No in S22), the controller 13 performs the irradiation for the normal irradiation time in the subsequent irradiation step (S24).

Thus, when the accumulated time has exceeded the predetermined accumulated time, the controller 13 sets the irradiation time for which irradiation with light from the light source 8 is to be performed in the subsequent irradiation step to a longer time than when the accumulated time has not exceeded the predetermined accumulated time. The irradiation with light is performed for the normal irradiation time in the irradiation step until the accumulated time exceeds the predetermined accumulated time. Accordingly, the time required to dissolve the organic components adhering to the thin film 7b of the reaction tube 7 can be reduced.

### (Second Modification)

In the first modification, when the accumulated time of the reaction step has exceeded the predetermined accumulated time, the irradiation time for the irradiation step is set to a longer time than when the accumulated time has not exceeded the predetermined accumulated time. However, instead of increasing the irradiation time, the light intensity of the light source 8 may be increased.

Fig. 6 is a flowchart of another example of a determination process for the food processing device 100 according to a second modification. The operation in the irradiation step of the method for operating the food processing device 100 is changed depending on the result of the determination process.

The controller 13 performs steps S21 and S22. Details of steps S21 and S22 are the same as or similar to those in the first modification, and description thereof will thus be omitted.

When it is determined that the measured accumulated time has exceeded the predetermined accumulated time (Yes in S22), the controller 13 performs the irradiation by causing the light source 8 to emit light at an intensity greater than a normal light intensity in the subsequent irradiation step (S123). Accordingly, in the subsequent irradiation step performed after the predetermined accumulated time has been exceeded, a greater amount of organic components adhering to the thin film 7b of the reaction tube 7 can be dissolved. Thus, the operation of restoring the catalytic activity can be effectively performed.

When it is determined that the measured accumulated time has not exceeded the predetermined accumulated time (No in S22), the controller 13 performs the irradiation by causing the light source 8 to emit light at the normal light intensity in the subsequent irradiation step (S124).

Thus, when the accumulated time has exceeded the predetermined accumulated time, the controller 13 sets the intensity of light to be emitted from the light source 8 in the subsequent irradiation step to a greater intensity than when the accumulated time has not exceeded the predetermined accumulated time. The irradiation with light is performed at the normal light intensity in the irradiation step until the accumulated time exceeds the predetermined accumulated time. Accordingly, the time required to dissolve the organic components adhering to the thin film 7b of the reaction tube 7 can be reduced.

### (Third Modification)

In the above-described first embodiment, the irradiation step performed in step S17 may be skipped depending on the detection result obtained by the light quantity detector 16.

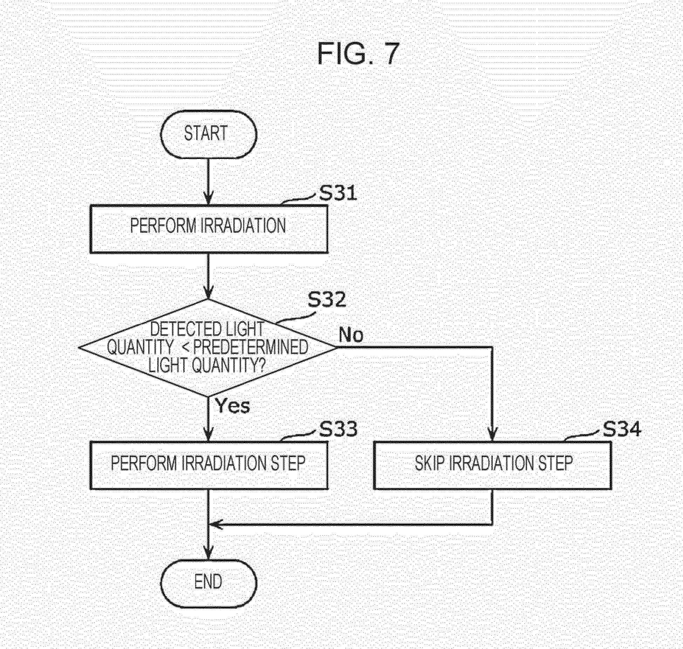

Fig. 7 is a flowchart of another example of a determination process for the food processing device 100 according to a third modification. The operation in the irradiation step of the method for operating the food processing device 100 is changed depending on the result of the determination process.

The controller 13 performs irradiation with light from the light source 8 in a period after the removing step and before the second introduction step in the subsequent group of steps (S31).

Next, the controller 13 determines whether the quantity of light detected by the light quantity detector 16 is less than a predetermined light quantity (S32).

When the detected light quantity is less than the predetermined light quantity (Yes in S32), the controller 13 performs the subsequent irradiation step in step S17 (S33). Thus, when the quantity of light detected by the light quantity detector 16 is less than the predetermined light quantity, it can be determined that the amount organic components adhering to the outer surface of the reaction tube 7 is so large that sufficient catalytic activity cannot be obtained. Therefore, when the quantity of light detected by the light quantity detector 16 is less than the predetermined light quantity, the irradiation step is performed. Accordingly, the organic components adhering to the outer surface of the reaction tube 7 can be efficiently dissolved.

When the detected light quantity is greater than or equal to the predetermined light quantity (No in S32), the controller 13 skips the subsequent irradiation step in step S17 (S34). In other words, the controller 13 performs the subsequent step in step S11 without performing step S17. Thus, when the quantity of light detected by the light quantity detector 16 is greater than or equal to the predetermined light quantity, the controller 13 may determine that the amount of organic components adhering to the outer surface of the reaction tube 7 is not so large that sufficient catalytic activity cannot be obtained. Therefore, when the quantity of light detected by the light quantity detector 16 is greater than or equal to the predetermined light quantity, the controller 13 skips the irradiation step. Accordingly, the time required for the irradiation step and the electric power consumed in the irradiation step can be reduced.

The predetermined light quantity may be set based on the light quantity at which the catalytic activity is reduced to less than the predetermined threshold by measuring the relationship between the quantity of light detected by the light quantity detector 16 and the catalytic activity in advance.

### (Fourth Modification)

In the above-described first embodiment, the irradiation step is performed in the period after the cleaning step and before the subsequent first introduction step. However, the irradiation step is not limited to this. For example, the irradiation step may be performed in a period after the first introduction step performed for the second or greater time and before the second introduction step performed for the second or greater time.

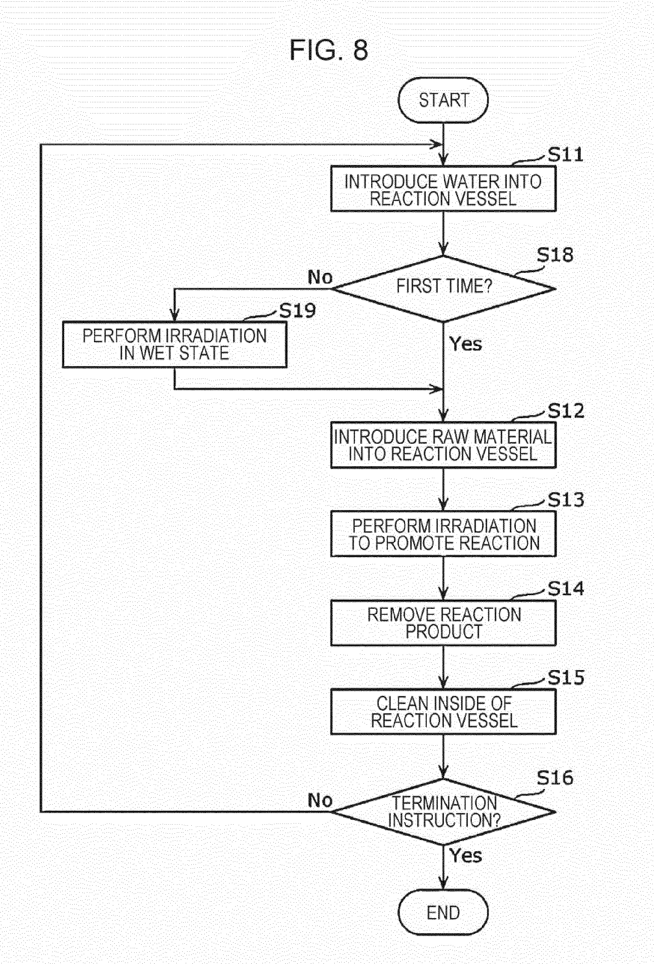

Fig. 8 is a flowchart of an example of a method for operating the food processing device 100 according to a fourth modification. Steps that are the same as or similar to those of the first embodiment are denoted by the same reference numerals, and description thereof will thus be omitted.

First, the controller 13 performs step S11. In the fourth modification, the first introduction step of step S11 is performed prior to the second introduction step of step S12.

Next, the controller 13 determines whether the current group of steps is the group of steps performed for the first time (S18).

When it is determined that the current group of steps is the group of steps performed for the first time (Yes in S18), the controller 13 performs steps S12 to S 16.

When it is determined that the current group of steps is the group of steps performed for the second or greater time (No in S 18), the controller 13 performs the irradiation with light from the light source 8 while water is in contact with the outer surface of the reaction tube 7 (S19: irradiation step). The controller 13 performs the irradiation with light from the light source 8 while the water introduced into the reaction vessel 1 in the first introduction step is in contact with the outer surface of the reaction tube 7.

After that, the controller 13 performs steps S12 to S 16.

Thus, in the food processing device 100, the organic components adhering to the outer surface of the reaction tube can be dissolved by using the water used as the material of the mixture. Thus, the water used in the irradiation step can be saved.

In the irradiation step of step S19, the controller 13 may cause the stirrer 2 to stir the water introduced into the reaction vessel 1 in the first introduction step. The controller 13 causes the stirrer 2 to stir the water in the reaction vessel 1 during the irradiation with light from the light source 8. In other words, the stirring and the irradiation are performed in the same period in the irradiation step. Therefore, the outer surface of the reaction tube 7 can be irradiated with light while water is stirred and brought into contact with the outer surface of the reaction tube 7. Thus, the organic components adhering to the outer surface can be effectively dissolved.

Unlike the first embodiment, when the result of the determination in step S16 is No, the controller 13 performs step S11 without performing step S 17.

### (Fifth Modification)

The food processing device 100 may include a reaction vessel 1 and catalyst reactors 6 disposed in the reaction vessel 1, and each catalyst reactor 6 may include a reaction tube 7, a light source 8 disposed in the reaction tube 7, and a photocatalyst thin film 7b provided on an outer surface of the reaction tube 7.

The food processing device 100 may perform an operation method including groups of steps.

Each group of steps may include an introduction step (S11, S12) of introducing a raw material and water into the reaction vessel 1; a reaction step (S13) of producing a reaction product from the raw material and the water; and a removing step (S14) of removing the reaction product from the reaction vessel 1. In the reaction step (S13), the controller 13 may cause the light source 8 to irradiate the photocatalyst thin film 7b with first light. The groups of steps may include a first group of steps and a second group of steps performed after the first group of steps. Between the first group of steps and the second group of steps, the controller 13 may cause the light source 8 to irradiate the photocatalyst thin film 7b with second light while water is in contact with the photocatalyst thin film 7b (irradiation step, S17).

### (Second Embodiment)

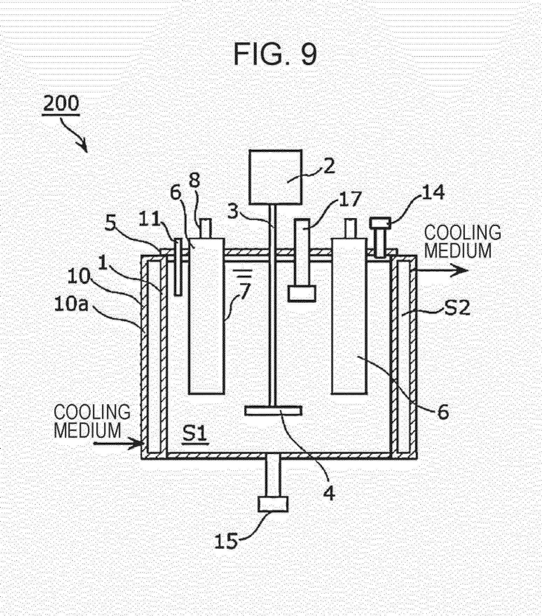

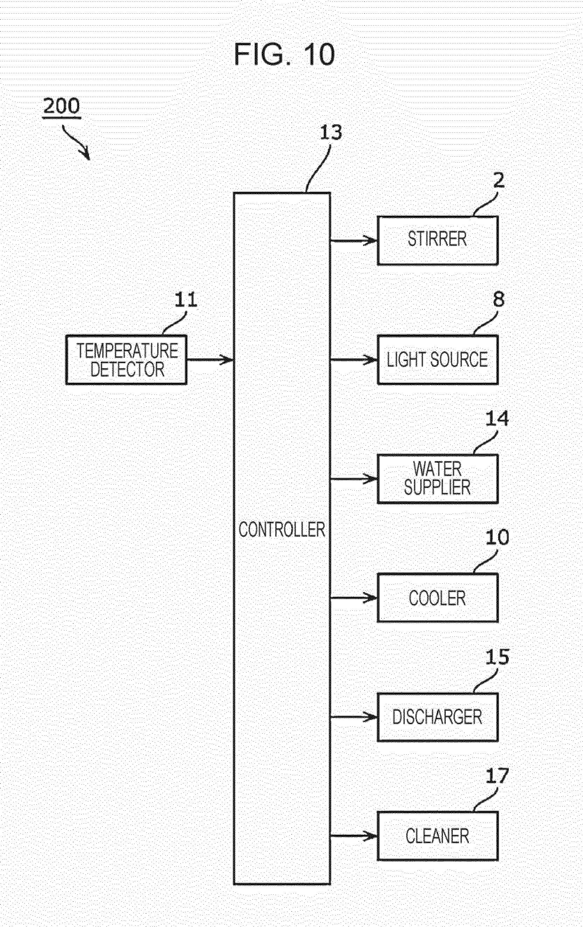

A food processing device 200 according to a second embodiment will be described with reference to Figs. 9 and 10. Fig. 9 illustrates an example of the food processing device 200 according to the second embodiment. Fig. 10 is a block diagram of the food processing device 200 according to the second embodiment.

The food processing device 200 according to the second embodiment differs from the food processing device 100 according to the first embodiment in that the light quantity detector 16 is not provided and a cleaner 17 is provided. The difference will now be described. Components that are the same as or similar to those of the first embodiment are denoted by the same reference numerals, and detailed description thereof will thus be omitted.

The cleaner 17 cleans the outer surface of each reaction tube 7 by using water. The cleaner 17 is capable of suppling water to the outer surface of the reaction tube 7. More specifically, the cleaner 17 cleans the outer surface of the reaction tube 7 by spraying jets of water against the outer surface of the reaction tube 7.

In the second embodiment, step S15 and step S17 differ from those of the operation method according to the first embodiment. Steps other than step S15 and step S17 are the same as or similar to those in the first embodiment. The steps that are the same as or similar to those in the first embodiment are denoted by the same reference numerals, and detailed description thereof will thus be omitted.

In the cleaning step of step S15, the controller 13 cleans the outer surface of the reaction tube 7 by using the cleaner 17. When the result of the determination in step S16 is No, step S17 is performed. Thus, the irradiation step is performed subsequent to the cleaning step.

In the irradiation step of step S17, irradiation with light from the light source 8 is performed while the water from the cleaner 17 is in contact with the outer surface of the reaction tube 7. Accordingly, the organic components adhering to the outer surface of the reaction tube 7 can be dissolved by using the water used to clean the outer surface of the reaction tube 7. Thus, the water used in the irradiation step can be saved.

The controller 13 may perform the irradiation with light from the light source 8 while supplying water to the outer surface of the reaction tube 7 by using the cleaner 17. Accordingly, the outer surface of the reaction tube 7 can be irradiated with light from the light source 8 while a film of water is formed on the outer surface. Thus, the organic components adhering to the outer surface can be effectively dissolved.

After the irradiation with light from the light source 8 is finished in the irradiation step, the controller 13 may supply water to the outer surface of the reaction tube 7 by using the cleaner 17. In other words, the cleaner 17 may be caused to spray water against the outer surface of the reaction tube 7. Thus, the dissolved organic components can be removed from the outer surface of the reaction tube 7. Thus, the catalytic activity of the photocatalyst can be restored.

The first to third modifications of the first embodiment may be similarly applied to the food processing device 200 according to the second embodiment. When the determination of the third modification is performed, the food processing device is required to include the light quantity detector 16. The cleaning step according to the fourth modification of the embodiment may be performed by using the cleaner 17.

Although the food processing devices according to one or more aspects of the present disclosure have been described with reference to the embodiments, the present disclosure is not limited to these embodiments. The scope of one or more aspects of the present disclosure may include embodiments obtained by applying various modifications conceivable by those skilled in the art to the above-described embodiments and embodiments obtained by combining constituent elements in different ones of the above-described embodiments as long as they do not depart from the spirit of the present disclosure.

### Industrial Applicability

An aspect of the present disclosure is applicable to, for example, a food processing device in which a photocatalyst is used to reform a raw material for a food product.

### Reference Signs List

- 1: reaction vessel
- 2: stirrer
- 3: rotating shaft
- 4: stirring body
- 5: lid
- 6: catalyst reactor
- 7: reaction tube
- 7a: glass base
- 7b: thin film
- 7c: bottom surface
- 7d: opening portion
- 8: light source
- 10: cooler
- 10a: outer wall
- 11: temperature detector
- 12: sealing portion
- 13: controller
- 14: water supplier
- 15: discharger
- 16: light quantity detector
- 17: cleaner
- 100, 200: food processing device

## Claims

1. A method for operating a food processing device,
wherein the food processing device includes:
a reaction vessel that receives a mixture in a liquid form including a raw material for a food product and water; and
a catalyst reactor disposed in the reaction vessel, the catalyst reactor including a reaction tube and a light source disposed in the reaction tube, the reaction tube having an outer surface on which a photocatalyst is provided and transmitting light emitted from the light source, and
wherein the method for operating the food processing device comprises:
an irradiation step of performing irradiation with light from the light source while water is in contact with the outer surface of the reaction tube in a period after a reaction product is removed from the reaction vessel and before a raw material is subsequently introduced into the reaction vessel.

2. The method for operating the food processing device according to claim 1, further comprising:
a first introduction step of introducing the water into the reaction vessel;
a second introduction step of introducing the raw material into the reaction vessel;
a reaction step of promoting reaction of the mixture by irradiation with light from the light source while the mixture is in contact with the outer surface of the reaction tube, the mixture including the water and the raw material that have been introduced;
a removing step of removing the reaction product from the reaction vessel; and
a cleaning step of cleaning an inside of the reaction vessel with water,
wherein a group of steps is repeatedly performed, the group of steps including an introduction step including the first introduction step and the second introduction step, the reaction step, the removing step, and the cleaning step that are performed in that order in one cycle, and
wherein, when the group of steps is repeatedly performed, the irradiation step is performed in a period after the removing step and before the second introduction step in the subsequent group of steps.

3. The method for operating the food processing device according to claim 2,
wherein, in the reaction step, an accumulated time for which the reaction step has been performed is measured, and
wherein, when the accumulated time has exceeded a predetermined accumulated time, an irradiation time for which the irradiation with light from the light source is performed in the irradiation step is set to a longer time than when the accumulated time has not exceeded the predetermined accumulated time.

4. The method for operating the food processing device according to claim 2,
wherein, in the reaction step, an accumulated time for which the reaction step has been performed is measured, and
wherein, when the accumulated time has exceeded a predetermined accumulated time, an intensity of light emitted by the light source in the irradiation step is set to a greater intensity than when the accumulated time has not exceeded the predetermined accumulated time.

5. The method for operating the food processing device according to any one of claims 2 to 4,
wherein the first introduction step is performed prior to the second introduction step,
wherein the irradiation step is performed in a period after the first introduction step and before the second introduction step, and
wherein, in the irradiation step, the irradiation with light from the light source is performed while the water introduced into the reaction vessel in the first introduction step is in contact with the outer surface of the reaction tube.

6. The method for operating the food processing device according to claim 5,
wherein the food processing device further includes a stirrer that stirs the mixture in the reaction vessel,
wherein, in the irradiation step, stirring of the water introduced into the reaction vessel in the first introduction step is performed by using the stirrer, and
wherein, in the irradiation step, the stirring and the irradiation are performed in a same period.

7. The method for operating the food processing device according to any one of claims 2 to 4,
wherein the food processing device further includes a cleaner that cleans the outer surface of the reaction tube with water,
wherein, in the cleaning step, the outer surface of the reaction tube is cleaned by using the cleaner,
wherein the irradiation step is performed subsequent to the cleaning step, and
wherein, in the irradiation step, the irradiation with light from the light source is performed while water from the cleaner is in contact with the outer surface.

8. The method for operating the food processing device according to claim 7,
wherein the cleaner is capable of supplying water used for cleaning to the outer surface of the reaction tube, and
wherein, in the irradiation step, the irradiation with light from the light source is performed while water is being supplied to the outer surface by the cleaner.

9. The method for operating the food processing device according to any one of claims 2 to 8,
wherein the food processing device further includes a light quantity detector that detects a quantity of light emitted from the light source and transmitted through the reaction tube, and
wherein the irradiation step is skipped when the quantity of light detected by the light quantity detector upon irradiation with light from the light source is greater than or equal to a predetermined light quantity in a period after the removing step and before the introduction step in the subsequent group of steps.

10. The method for operating the food processing device according to claim 9,
wherein the irradiation step is performed when the quantity of light detected by the light quantity detector upon irradiation with light from the light source is less than the predetermined light quantity in the period after the removing step and before the introduction step in the subsequent group of steps.

11. A food processing device comprising:
a reaction vessel that receives a mixture in a liquid form including a raw material for a food product and water;
a catalyst reactor disposed in the reaction vessel and including a reaction tube and a light source, the reaction tube having an outer surface on which a photocatalyst is provided and transmitting light, the light source emitting light from an inside of the reaction tube to irradiate the photocatalyst; and
a controller that performs irradiation with light from the light source while water is in contact with the outer surface of the reaction tube in a period after a reaction product including the mixture is removed from the reaction vessel and before a raw material is subsequently introduced into the reaction vessel.

12. A method for operating a food processing device,
wherein the food processing device includes a reaction vessel and a catalyst reactor disposed in the reaction vessel,
wherein the catalyst reactor includes a reaction tube and a light source disposed in the reaction tube,
wherein the reaction tube has an outer surface on which a photocatalyst is provided,
wherein the method for operating the food processing device comprises groups of steps, each group of steps including:
an introduction step of introducing a raw material and water into the reaction vessel;
a reaction step of producing a reaction product from the raw material and the water, the reaction step including causing the light source to irradiate the photocatalyst with first light; and
a removing step of removing the reaction product from the reaction vessel,
wherein the groups of steps include a first group of steps and a second group of steps performed subsequent to the first group of steps, and
wherein an irradiation step of causing the light source to irradiate the photocatalyst with second light while water is in contact with the catalyst is performed between the first group of steps and the second group of steps.
